# DEMANDE DE BREVET EUROPEEN

(11) **EP 2 462 810 A1**
(43) Date de publication de la demande: **13.06.2012**
(21) Numéro de dépôt: 11192094.8
(22) Date de dépôt: 06.12.2011
(51) Int. Cl.: A22B 5/20

(54) **Boîte à couteaux pour une machine à fendre les carcasses d'animaux**

(30) Priorité: 08.12.2010 FR 1060226
(71) Demandeur: Durand International, 07210 Baix (FR)
(72) Inventeur: Denis, Christian, 07250 LE POUZIN (FR)
(74) Mandataire: Gaillarde, Frédéric F. Ch.

(57) **Abrégé**

Boîte à couteaux (1) pour une machine à fendre les carcasses d'animaux, comprenant un châssis (13) destiné à être monté coulissant verticalement sur un bâti fixe, deux bras (7a, 7b) de couteaux montés articulés sur ledit châssis (13) à l'une de leurs extrémités, des couteaux (3a, 3b) montés à l'autre extrémité de chacun de ces bras (7a, 7b), des moyens à excentriques (V) pour conférer des mouvements de va-et-vient antagonistes auxdits bras (7a, 7b), et des moyens de moto-réduction (5) pour entraîner en rotation lesdits moyens à excentriques (V), cette boîte à couteaux (1) étant caractérisée en ce que lesdits bras (7a, 7b) sont sensiblement plans et situés dans le prolongement de leurs couteaux respectifs (3a, 3b), et en ce que lesdits moyens de moto-réduction (5) sont disposés à l'extérieur du volume défini par ces bras (7a, 7b) et couteaux (3a, 3b).

## Description

La présente invention se rapporte à une boîte à couteaux pour une machine à fendre les carcasses d'animaux.

Comme cela est connu en soi, on utilise dans les abattoirs des machines à fendre des carcasses d'animaux (porc, veaux, coches, etc.) dans le sens de la longueur.

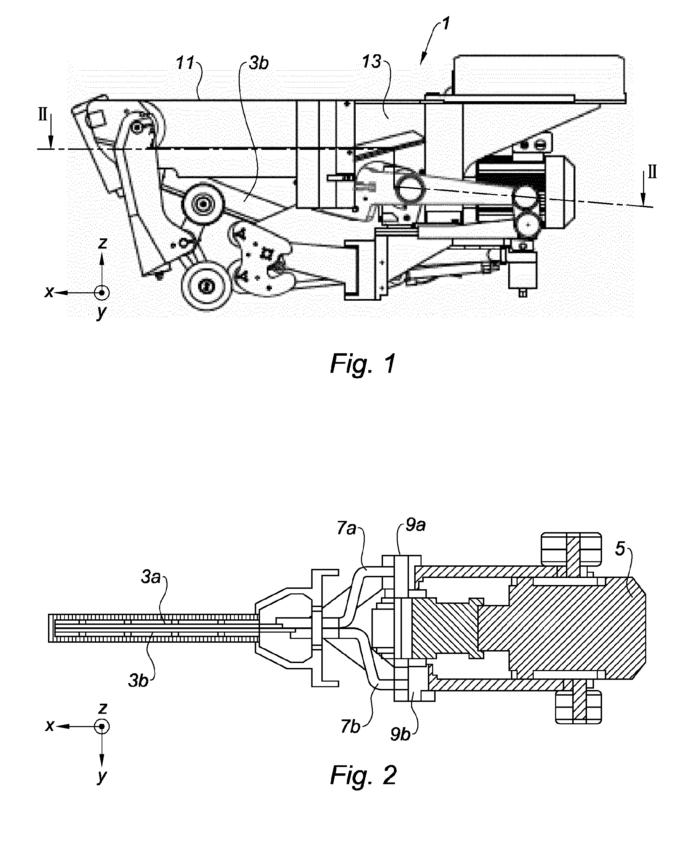

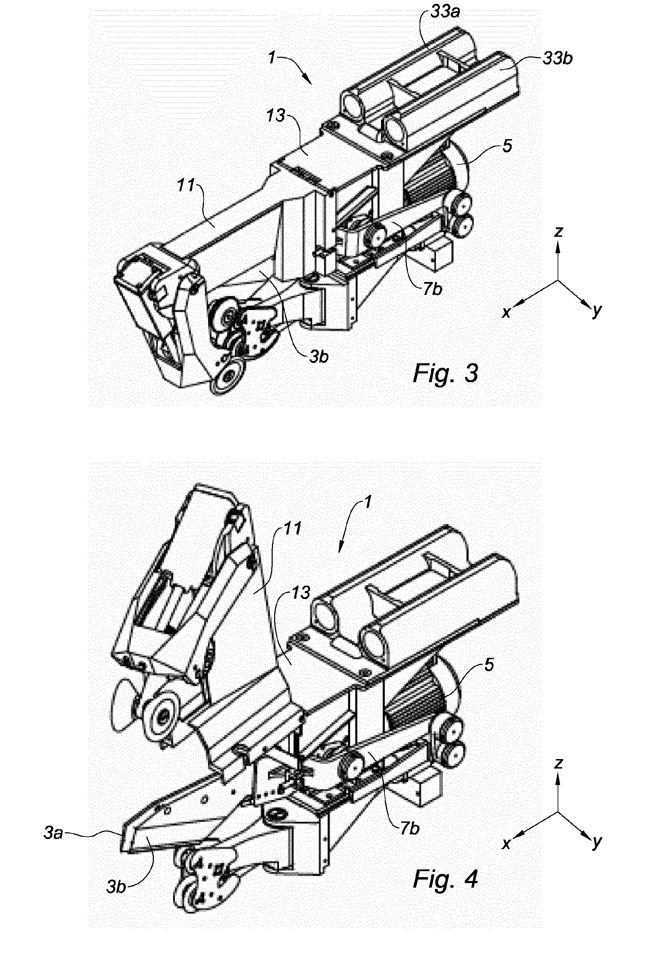

Pour ce faire, la machine comporte généralement un bâti sur lequel une boîte à couteaux 1 (voir figures 1 à 4) est montée coulissante au moins selon la direction verticale.

Cette boîte à couteaux comporte deux couteaux jointifs 3a, 3b, animés par un moto-réducteur 5 de mouvements de va-et-vient sensiblement horizontaux et antagonistes, permettant de découper la carcasse qui arrive généralement suspendue par les pieds arrière, le long de la colonne vertébrale.

Classiquement, les couteaux 3a, 3b sont montés sur des bras 7a, 7b qui eux-mêmes sont actionnés par des excentriques 9a, 9b eux-mêmes couplés au moto-réducteur 5, ces excentriques 9a, 9b permettant d'assurer le mouvement de va-et-vient des deux couteaux 3a, 3b.

Des moyens de fixation démontables, comme enseigné par exemple par la demande de brevet FR 93 04794, déposée par la demanderesse, permettent de relier chaque couteau à son bras respectif.

Dans les boîtes à couteaux de la technique antérieure, on a pu relever un certain nombre d'inconvénients : la forme des bras des couteaux est complexe (en baïonnette), comme cela est visible notamment sur la figure 2, de sorte que leur coût de fabrication est élevé.

De plus, cette forme complexe induit des vibrations conduisant à une qualité de coupe non satisfaisante (découpe irrégulière dite « en sapin de Noël »).

En outre, pour démonter les couteaux 3a, 3b en vue de leur aiguisage ou de leur remplacement, il faut soulever une poutre guide-couteaux 11 montée pivotante sur le châssis 13 de la boîte à couteaux : cette poutre, réalisée en une seule pièce de fonderie ou mécano-soudée, est lourde, ce qui rend ces opérations de maintenances dangereuses pour un opérateur.

De plus, l'accès dans la zone qui se trouve entre les bras 7a, 7b des couteaux 3a, 3b et la poutre 11, notamment pour le nettoyage, est malaisé, de sorte que ce nettoyage ne peut être réalisé qu'imparfaitement, avec les risques sanitaires que cela représente.

La présente invention a notamment pour but de fournir une boîte à couteaux qui permette de s'affranchir des inconvénients susmentionnés.

On atteint ce but de l'invention avec une boîte à couteaux pour une machine à fendre les carcasses d'animaux, comprenant un châssis destiné à être monté coulissant verticalement sur un bâti fixe, deux bras de couteaux montés articulés sur ledit châssis à l'une de leurs extrémités, des couteaux montés à l'autre extrémité de chacun de ces bras, des moyens à excentriques pour conférer des mouvements de va-et-vient antagonistes auxdits bras, et des moyens de moto-réduction pour entraîner en rotation lesdits moyens à excentriques, cette boîte à couteaux étant remarquable en ce que lesdits bras sont sensiblement plans et situés dans le prolongement de leurs couteaux respectifs, et en ce que lesdits moyens de moto-réduction sont disposés à l'extérieur du volume défini par ces bras et couteaux.

Le fait de placer les moyens de moto-réduction à l'extérieur des bras permet de rendre ceux-ci sensiblement jointifs, c'est-à-dire disposés dans le prolongement de leurs couteaux associés.

On peut donc concevoir des bras de couteaux rectilignes, simples et peu coûteux à fabriquer.

Ce caractère rectiligne des bras de couteaux permet de plus de supprimer le porte-à-faux inhérent à la forme en baïonnette des bras de couteaux de la technique antérieure, ce qui permet de réduire les vibrations et les défauts de coupe constatés avec les machines de la technique antérieure.

Suivant d'autres caractéristiques de la boîte à couteaux selon l'invention :
- lesdits moyens à excentriques comprennent un vilebrequin comprenant deux manivelles coopérant respectivement avec chacun desdits bras de couteaux ;
- ledit vilebrequin est, de manière préférentielle mais non exclusive, formé d'une seule pièce : cette conception simplifie la fabrication et l'entretien de ce vilebrequin ;
- les extrémités arrière desdits bras de couteaux sont articulés sur ledit châssis par l'intermédiaire de biellettes ;
- lesdits moyens de moto-réduction entraînent lesdits moyens à excentriques par des courroies ou autres moyens de transmission, tels que des chaînes ;
- lesdits moyens de moto-réduction comprennent deux poulies motrices entraînant deux poulies fixées aux extrémités dudit vilebrequin à l'extérieur dudit châssis, par l'intermédiaire de deux courroies respectives ;
- ladite boîte à couteaux comprend un dispositif guidage des couteaux comportant deux demi-poutres aptes à se séparer en pivotant chacune autour d'un axe sensiblement vertical pour réaliser les opérations d'entretien.

La présente invention se rapporte également à une machine à fendre les carcasses d'animaux, remarquable en ce qu'elle est équipée d'une boîte à couteaux conforme à ce qui précède.

D'autres caractéristiques et avantages de la présente invention apparaîtront à la lumière de la description qui va suivre, et à l'examen des figures ci-annexées, dans lesquelles :
- la figure 1 représente une vue de côté d'une boîte à couteaux de la technique antérieure,
- la figure 2 représente une vue en coupe prise selon la ligne II-II de la figure 1 de cette boîte à couteaux,
- la figure 3 est une vue en perspective de cette boîte à couteaux, la poutre guide-couteaux étant représentée en position de fonctionnement,
- la figure 4 est une vue analogue à celle de la figure 3, la poutre guide-couteaux étant représentée en position de maintenance,
- les figures 5 à 8 sont des vues respectivement analogues à celles des figures 1 à 4, d'une boîte à couteaux selon l'invention.

Sur l'ensemble de ces figures, des références identiques ou analogues désignent des organes ou ensembles organes identiques ou analogues.

On a représenté sur les figures, un repère tri-dimensionnel X, Y, Z, dans lequel l'axe Z représente la verticale, et le plan XY est un plan horizontal.

La direction Y est celle dans laquelle les carcasses d'animaux à fendre se déplacent vers la machine équipée de la boîte à couteaux, la direction X étant alors perpendiculaire à la direction de déplacement de ces carcasses.

Sur l'ensemble des ces figures, des références identiques ou analogues désignent des organes ou ensembles d'organes identiques ou analogues.

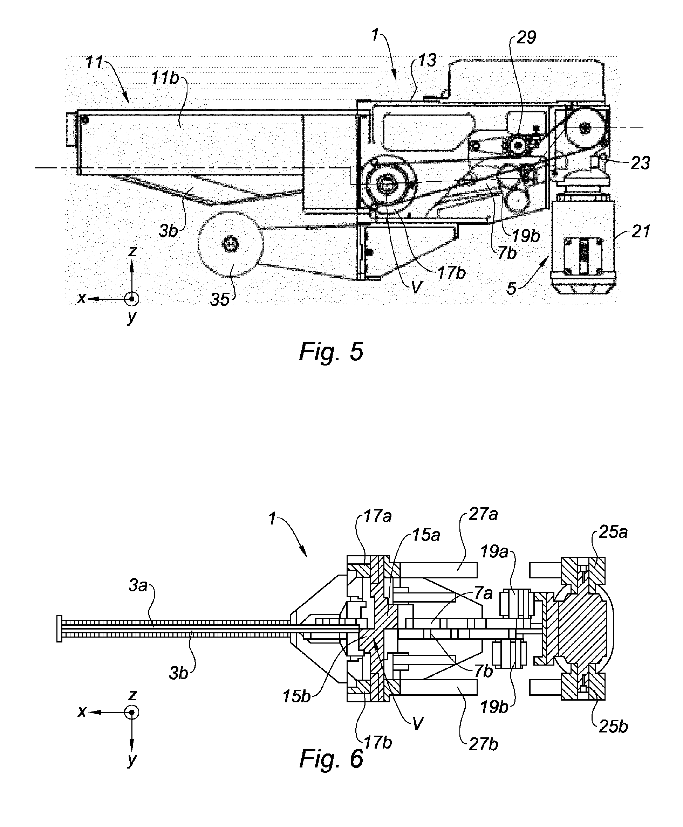

La boîte à couteaux de l'état de la technique antérieure, représentée aux figures 1 à 4, a été décrite de manière détaillée dans le préambule de la présente description, de sorte que l'on peut immédiatement passer à la boîte à couteaux selon l'invention, représentée aux figures 5 à 8.

Comme cela est visible notamment à la figure 6, dans la boîte à couteaux 1 selon l'invention, les bras 7a, 7b des couteaux 3a, 3b sont disposés dans l'alignement de ces couteaux, c'est-à-dire sensiblement dans le même plan XZ.

Un vilebrequin V, pouvant être formé d'une seule ou de plusieurs pièces et comportant deux manivelles 15a, 15b, traverse les deux bras 7a, 7b, et comporte à chacune de ses extrémités une poulie 17a, 17b.

Plus précisément, les manivelles 15a, 15b de ce vilebrequin coopèrent avec des orifices de formes correspondantes réalisées dans les deux bras 7a, 7b.

A leur extrémité avant, c'est-à-dire située à gauche de la figure 6, chacun des bras 7a, 7b est relié à son couteau associé 3a, 3b par des moyens démontables tels que ceux enseignés par la demande de brevet FR 93 04794, déposée par la demanderesse.

A leur extrémité arrière, c'est-à-dire située à l'opposé des couteaux 3a, 3b, les bras 7a, 7b sont reliés au châssis 13 de la boîte à couteaux par l'intermédiaire de biellettes 19a, 19b, dont l'une en particulier est visible sur la figure 5.

Un ensemble moto-réducteur 5, comprenant un moteur électrique 21 et un ensemble de réduction 23, entraîne deux poulies d'entraînement 25a, 25b entraînant chacune à leur tour des courroies respectives 27a, 27b, disposées de part et d'autre des bras 7a, 7b.

Ces courroies respectives 27a, 27b sont en prise avec les poulies 17a, 17b fixées aux extrémités du vilebrequin V.

De préférence, ces courroies et toutes les poulies sont crantées.

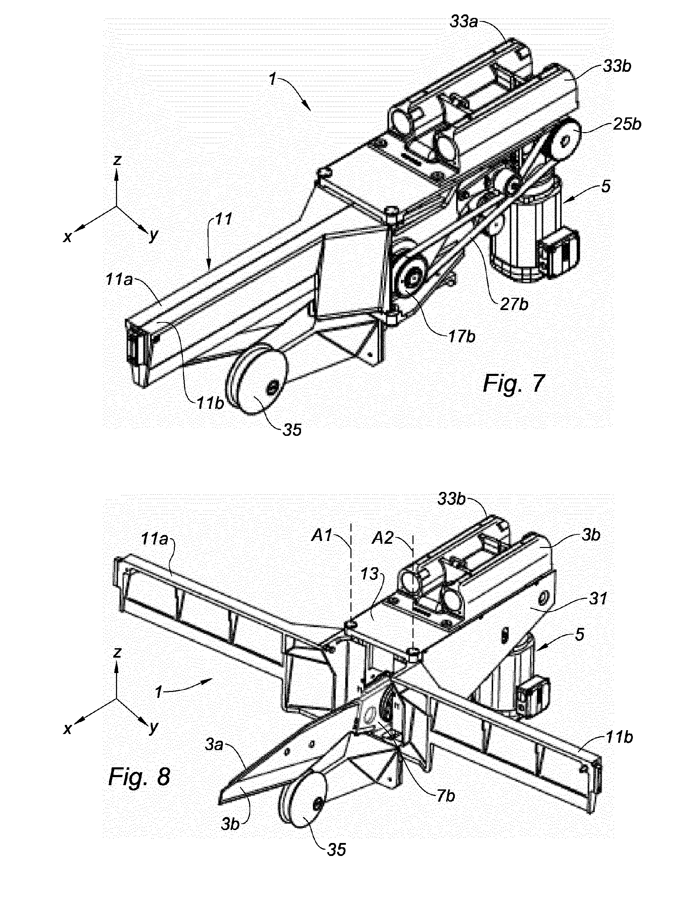

Un dispositif de régulation de la tension de chaque courroie est en outre prévu, l'un 29 de ces dispositifs étant visible notamment sur les figures 5 et 7 : ce dispositif comprend classiquement une poulie dont la position peut être ajustée par rapport à la trajectoire de la courroie concernée.

Sur les figures 5 à 7, les poulies, les courroies et les bras des couteaux sont visibles, mais il faut bien entendu comprendre que l'ensemble de ces organes est caréné par un carter 31, comme cela est visible à la figure 8.

Deux rails de support 33a, 33b permettent de relier la boîte à couteaux selon l'invention au bâti fixe (non représenté) de la machine à fendre les carcasses, par l'intermédiaire d'un chariot monté coulissant selon la direction verticale (Z) sur ce bâti.

Selon une caractéristique intéressante de l'invention, la poutre guide-couteaux 11, qui recouvre partiellement les couteaux 3a, 3b et assure leur guidage en mode de fonctionnement, comporte en réalité deux demi-poutres 11 a, 11 b, aptes à se séparer l'une de l'autre en pivotant chacune sur le châssis 13 autour d'un axe sensiblement vertical respectif A1, A2, comme cela est visible sur la figure 8.

L'ouverture de ces deux dem i-poutres 11 a, 11 b permet d'accéder aux couteaux 3a, 3b, ainsi qu'à l'ensemble du mécanisme d'actionnement de ces couteaux, en toute sécurité.

Ceci non seulement pour réaliser les opérations de maintenance, mais également pour assurer le nettoyage régulier, notamment des bras 7a, 7b, de l'intérieur de la poutre 11 et de leur vilebrequin V, afin de respecter les contraintes sanitaires imposées à ce genre d'installation.

Le mode de fonctionnement de la boîte à couteaux selon l'invention, et ses avantages, résultent directement de la description qui précède.

En situation de fonctionnement, c'est-à-dire de fente des carcasses qui arrivent suspendues par les pieds arrière au droit de la boîte à couteaux 1, cette boîte à couteaux se trouve dans la configuration des figures 5 et 7, c'est-à-dire avec les deux demi-poutres 11a, 11 b recouvrant les couteaux 3a, 3b.

Sous l'effet du moto-réducteur 5, les poulies d'entraînement 25a, 25b tournent et transmettent leur mouvement de rotation par l'intermédiaire des courroies 27a, 27b aux poulies 17a, 17b du vilebrequin V.

Les manivelles 15a, 15b de ce vilebrequin V, en association avec les biellettes 19a, 19b, provoquent un mouvement de va et vient antagoniste des deux couteaux 3a, 3b, sensiblement selon la direction X (mouvement elliptique).

Ce mouvement de va et vient, couplé à un mouvement global descendant de la boîte à couteaux 1 sous l'effet du déplacement du chariot (non représenté) sur lequel elle est montée, permet le découpage de la carcasse, le long de la colonne vertébrale de celle-ci.

Des organes de maintien appropriés de cette carcasse pendant cette opération de découpe, tels que des galets ventraux 35 (voir figure 5) et dorsaux (non représentés) permettent de stabiliser la carcasse pendant l'opération de découpe.

L'entraînement des deux bras 7a, 7b par l'extérieur, grâce aux courroies 27a, 27b (voir figure 6) coopérant avec les poulies 17a, 17b disposées aux extrémités extérieures du vilebrequin monobloc V, permet l'utilisation de bras 7a, 7b de forme rectiligne, c'est-à-dire disposés sensiblement dans le même plan que leurs couteaux associés 3a, 3b.

Cette forme rectiligne est très simple à réaliser, et donc peu coûteuse, et permet en outre de supprimer les efforts de porte-à-faux inhérents à la conception en baïonnette des bras des boîtes à couteaux de la technique antérieure.

On notera que la réalisation de la poutre guide-couteaux 11 en deux demi-poutres 11a, 11b (voir figure 8) permet de supprimer les risques inhérents à la poutre monobloc de la technique antérieure, s'ouvrant vers le haut : on supprime en effet tout risque de chute de cette poutre, et de blessure de l'opérateur intervenant pour les opérations de maintenance ; aucun effort n'est requis pour ouvrir la poutre

On notera de manière avantageuse que les préceptes de la présente invention, exposés ci-dessus, sont aisément adaptables à des boîtes à couteaux de la technique antérieure, ce qui permet de moderniser le parc de machines existantes avec de moindres modifications.

Bien entendu, la présente invention n'est nullement limitée aux modes de réalisation décrits et représentés, fournis à titre de simples exemples.

En particulier, toutes les variantes d'entraînement des couteaux et de leur guidage sont envisageables et adaptables dans le cadre de la présente invention.

## Revendications

1. Boîte à couteaux (1) pour une machine à fendre les carcasses d'animaux, comprenant un châssis (13) destiné à être monté coulissant verticalement sur un bâti fixe, deux bras (7a, 7b) de couteaux montés articulés sur ledit châssis (13) à l'une de leurs extrémités, des couteaux (3a, 3b) montés à l'autre extrémité de chacun de ces bras (7a, 7b), des moyens à excentriques (V) pour conférer des mouvements de va-et-vient antagonistes auxdits bras (7a, 7b), et des moyens de moto-réduction (5) pour entraîner en rotation lesdits moyens à excentriques (V), cette boîte à couteaux (1) étant **caractérisée en ce que** lesdits bras (7a, 7b) sont sensiblement plans et situés dans le prolongement de leurs couteaux respectifs (3a, 3b), et **en ce que** lesdits moyens de moto-réduction (5) sont disposés à l'extérieur du volume défini par ces bras (7a, 7b) et couteaux (3a, 3b).

2. Boîte à couteaux (1) selon la revendication 1, **caractérisée en ce que** lesdits moyens à excentriques comprennent un vilebrequin (V) comprenant deux manivelles (15a, 15b) coopérant respectivement avec chacun desdits bras (7a, 7b) de couteaux.

3. Boîte à couteaux (1) selon la revendication 2, **caractérisée en ce que** ledit vilebrequin (V) est formé d'une seule pièce.

4. Boîte à couteaux (1) selon l'une quelconque des revendications précédentes, **caractérisée en ce que** les extrémités arrière desdits bras (7a, 7b) de couteaux sont articulés sur ledit châssis (13) par l'intermédiaire de biellettes.

5. Boîte à couteaux (1) selon la revendication 1, **caractérisée en ce que** lesdits moyens de moto-réduction (5) entraînent lesdits moyens à excentriques (V) par des courroies (27a, 27b).

6. Boîte à couteaux (1) selon l'une des revendications 2 ou 3, **caractérisée en ce que** lesdits moyens de moto-réduction (5) comprennent deux poulies motrices (25a, 25b) entraînant deux poulies (17a, 17b) fixées aux extrémités dudit vilebrequin (V) à l'extérieur dudit châssis, par l'intermédiaire de deux courroies respectives (27a, 27b).

7. Boîte à couteaux (1) selon l'une quelconque des revendications précédentes, **caractérisée en ce qu'**elle comprend un dispositif guidage (11) des couteaux (3a, 3b) comportant deux demi-poutres (11a, 11 b) aptes à se séparer en pivotant chacune autour d'un axe (A1, A2) sensiblement vertical pour réaliser les opérations d'entretien.

8. Machine à fendre les carcasses d'animaux, **caractérisée en ce qu'**elle est équipée d'une boîte à couteaux (1) conforme à l'une quelconque des revendications précédentes.
